# EUROPEAN PATENT APPLICATION

(11) **EP 1 863 158 A2**
(43) Date of publication of application: **05.12.2007**
(21) Application number: 06124302.8
(22) Date of filing: 17.11.2006
(51) Int. Cl.: H02M 3/28

(54) **Power Supply Device**

(30) Priority: 29.05.2006 KR 20060047913
(71) Applicant: Samsung Electronics Co., Ltd., Suwon-si 442-742 Gyeonggi-do (KR)
(72) Inventor: Lee, Ju-taek, Yeongtong-gu, Gyeonggi-do, Suwon-si (KR); Chang, Gil-yong, Yeongtong-gu, Gyeonggi-do, Suwon-si (KR)
(74) Representative: Waddington, Richard

(57) **Abstract**

Disclosed is a power supply device comprising a power supplying part (10) that supplies power; a voltage detecting part (30) that detects the level of voltage of the power supplied from the power supplying part (10) using at least one resistor (R1-R4); a switching converting part (20) that switches on/off to allow the power supplying part (10) to output power having a constant level of voltage based on the level of voltage detected by the voltage detecting part (30); and a constant voltage generating part (40) that receives power applied to the at least one resistor (R1-R4), drops a voltage of the received power by a preset normal voltage level, and supplies the dropped voltage to the switching converting part (20), when the level of voltage of the power supplied from the power supplying part (10) gradually increases. With this configuration, a circuit can be protected even when an overvoltage occurs due to an erroneous operation of the voltage detecting part (30) that detects an output voltage.

## Description

The present invention relates to a power supply device, and more particularly, to a power supply device which is capable of protecting a circuit from an overvoltage.

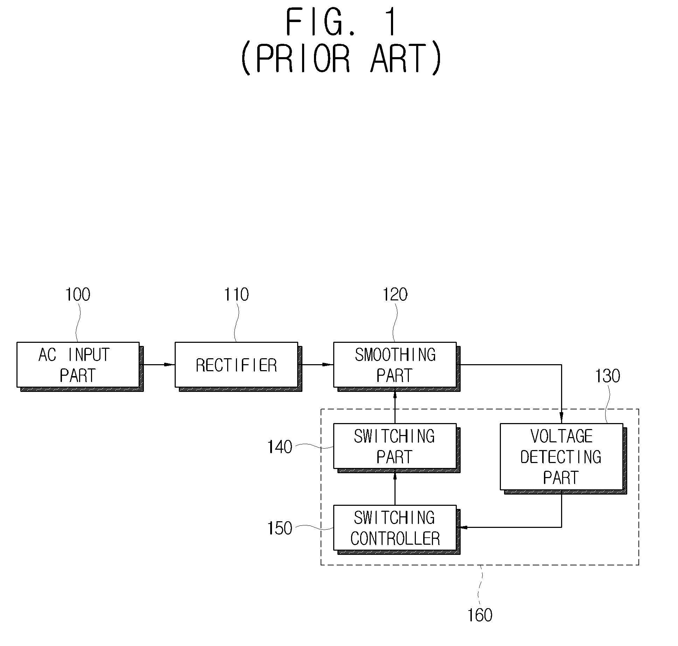

FIG. 1 is a control block diagram of a conventional power supply device. Hereinafter, an AC/DC converter that converts input AC power into DC power will be described as an example of the power supply device.

As shown in FIG. 1, the AC/DC converter comprises an AC input part 100 that receives commercial AC power (AC110/220V) from the outside, a rectifier 110 that rectifies the AC power from the AC input part 100, and a smoothing part 120 that smoothes a rectified voltage output from the rectifier 110. In addition, the AC/DC converter further comprises an output voltage compensating circuit 160 that keeps an output voltage of the smoothing part 120 constant.

The output voltage compensating circuit 160 comprises a switching part 140 that is switched on/off to keep the output voltage of the smoothing part 120 constant; a voltage detecting part 130 that detects the level of the output voltage of the smoothing part 120 and a switching controller 150 that controls the number of times of switching on/off the switching part 140 or On-time and Off-time according to the detected level of the output voltage.

The switching controller 150 compares the output voltage detected by the voltage detecting part 130 with a reference voltage and decreases the output voltage by decreasing the number of times of switching on/off the switching part 140 when the output voltage is larger than the reference voltage. On the contrary, the switching controller 150 increases the output voltage by increasing the number of times of switching on/off the switching part 140 when the output voltage is smaller than the reference voltage.

In general, the switching controller 150 contains an overvoltage protection circuit that stops the operation of the switching part 140 or turns the switching controller 150 into a latch mode when the level of the output voltage is rapidly changed.

Thus, the AC/DC converter may be protected from the overvoltage by controlling the switching part 140 according to the level of the output voltage.

However, such a conventional power supply device has a problem in that the switching part may not protect the power supply device from the overvoltage if the level of the output voltage is slowly changed due to an erroneous operation of the voltage detecting part 130 that detects the level of the output voltage.

For example, the voltage detecting part 150 comprises a plurality of resistors and detects an output voltage through voltages divided by the resistors. In this case, the resistor may be opened if the output voltage exceeds the rated voltage of each resistor.

Accordingly, the higher output voltage is applied to the opened resistor than those applied to other resistors, so that the level of a detected output voltage becomes smaller than the level of a reference voltage. Thus, the switching part 150 outputs a signal to increase the number of times of switching on/off the switching part 140, thereby gradually increasing the level of the output voltage. At this time, if the level of the output voltage becomes higher by about 1.2 to 1.5 times or above than a withstanding voltage of the smoothing part 120, an electrolytic condenser of the smoothing part 120 can not stand against such an overvoltage, which may result in explosion of the electrolytic condenser.

Accordingly, it is an object of the present invention to provide a power supply device, which is capable of protecting a circuit even in slow increase of an output voltage as well as rapid increase of the output voltage.

It is another object of the present invention to provide a power supply device that is capable of protecting a circuit even when an overvoltage occurs due to an erroneous operation of a module that detects an output voltage.

According to the present invention there is provided an apparatus and method as set forth in the appended claims. Preferred features of the invention will be apparent from the dependent claims, and the description which follows.

According to an aspect of the present invention there is provided a power supply device comprising: a power supplying part that is operable to supply power; a voltage detecting part that is operable to detect the level of voltage of the power supplied from the power supplying part using at least one resistor; a switching converting part that is operable to switch on/off to allow the power supplying part to output power having a constant level of voltage based on the level of voltage detected by the voltage detecting part; and a constant voltage generating part that is operable to receive power applied to the at least one resistor, to drop a voltage of the received power by a preset normal voltage level, and to supply the dropped voltage to the switching converting part, when the level of voltage of the power supplied from the power supplying part gradually increases.

Preferably, the switching converting part comprises a switching part that is operable to adjust the level of voltage of the power and a switching controller that is operable to control the switching part, and the switching controller is operable to compare the level of voltage detected by the voltage detecting part with a predetermined reference voltage, to increase the number of times of switching on/off the switching part when the detected level of voltage is smaller than the reference voltage, and to decrease the number of times of switching on/off the switching part when the detected level of voltage is larger than the reference voltage.

Preferably, the constant voltage generating part comprises a voltage regulator diode connected in parallel to the at least one resistor, and the voltage regulator diode has a breakdown voltage corresponding to resistance of the at least one resistor.

Preferably, the voltage regulator diode is operable to conduct so that power is applied to the switching controller when a voltage across the at least one resistor is higher than the breakdown voltage.

Preferably, the voltage detecting part comprises a first resistor, a second resistor, a third resistor and a fourth resistor connected in series, and the constant voltage generating part comprises a first voltage regulator diode having a cathode connected to an upper end of the first resistor and an anode connected to a lower end of the second resistor, and a second voltage regulator diode having a cathode connected to an upper end of the second resistor and an anode connected to a lower end of the third resistor.

Preferably, the first voltage regulator diode is adapted such that power is applied thereto when a voltage across the first resistor increases and a voltage difference between the first resistor and the second resistor is larger than a breakdown voltage of the first voltage regulator diode.

Preferably, the second voltage regulator diode is adapted such that power is applied thereto when a voltage across the third resistor increases and a voltage difference between the second resistor and the third resistor is larger than a breakdown voltage of the second voltage regulator diode.

Preferably, the first voltage regulator diode is adapted such that power is applied thereto when a voltage across the second resistor increases and a voltage difference between the second resistor and the third resistor is larger than a breakdown voltage of the first voltage regulator diode, and the second voltage regulator diode is adapted such that power is applied thereto when the voltage difference between the second resistor and the third resistor is larger than a breakdown voltage of the second voltage regulator diode.

For a better understanding of the invention, and to show how embodiments of the same may be carried into effect, reference will now be made, by way of example, to the accompanying diagrammatic drawings in which:
FIG. 1 is a control block diagram of a conventional power supply device;
FIG. 2 is a control block diagram of a power supply device according to an embodiment of the present invention; and
FIG. 3 is a circuit diagram of a voltage detecting part and a constant voltage generating part according to an embodiment of the present invention.

Reference will now be made in detail to exemplary embodiments of the present invention, examples of which are illustrated in the accompanying drawings.

In the following description, an AC/DC converter will be illustrated as an example of the power supply device of the present invention, and the same elements will be denoted by the same reference numerals.

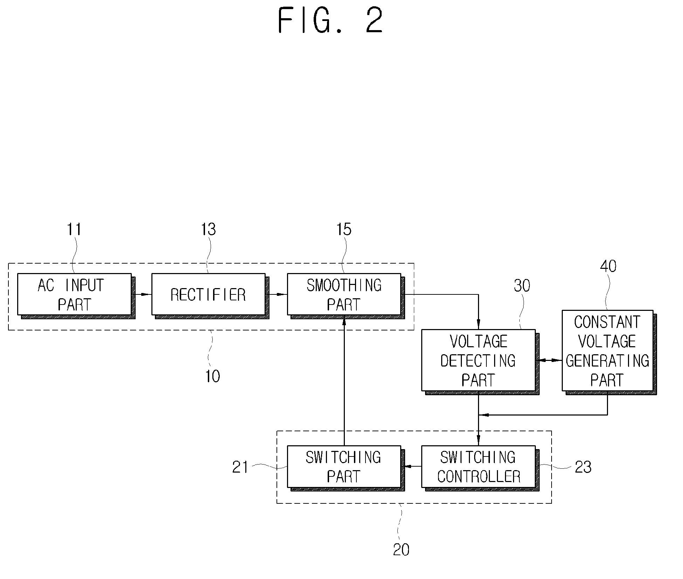

As shown in FIG. 2, a power supply device according to an embodiment of the present invention comprises a power supplying part 10, a voltage detecting part 30, a switching converting part 20 and a constant voltage generating part 40.

The power supplying part 10 supplies DC power into which externally-input AC power is converted. The power supplying part 10 comprises an AC input part 11, a rectifying part 13 and a smoothing part 15. The power supplying part 10 may comprise an EMI (Electro-Magnetic Interference) filter that prevent noises of an input line of the AC power, which are introduced into the power supply device, from damaging internal parts of the power supply device.

The rectifying part 13 rectifies the AC power input via the AC input part 11 and may be embodied by a rectifying diode that converts an AC voltage of the AC power into a DC voltage. The smoothing part 15 may be embodied by a capacitor that smoothes a pulsating component of the DC voltage. The power smoothed by the smoothing part 15 is outputted to various modules requiring power and connected to the power supply device.

The switching converting part 20 comprises a switching part 21 that keeps a level of voltage outputted from the smoothing part 15 constant, and a switching controller 23.

The switching part 21 receives an on- or off-signal from the switching controller 23 and is switched on/off to adjust the level of voltage of the DC power. The switching part 21 may be embodied by a switching circuit using a MOSFET (Metal Oxide Semiconductor Field Effect Transistor).

The switching controller 23 controls the switching part 21 based on the level of voltage detected by the voltage detecting part 30, which will be described later. The switching controller 23 may comprise a comparator (for example, an error Amplifier, an OP amplifier, etc.) that compares the detected voltage with a predetermined reference voltage. The switching controller 23 controls the level of voltage output from the smoothing part 15 to remain at a predetermined level by adjusting the number of times of switching on/off the switching part 21 according to a result of the comparison of the comparator.

For example, the switching controller 23 increases the number of times of switching on/off the switching part 21 in the case where the voltage detected by the voltage detecting part 30 is higher than the reference voltage, and decreases the number of times of switching-on/off of the switching part 21 in the case where the voltage detected by the voltage detecting part 30 is lower than the reference voltage.

In the mean time, the switching controller 23 comprises an overvoltage protection circuit that stops a switching signal provided to the switching part 21 or turns the switching controller 23 into a latch mode when the output voltage is rapidly increased.

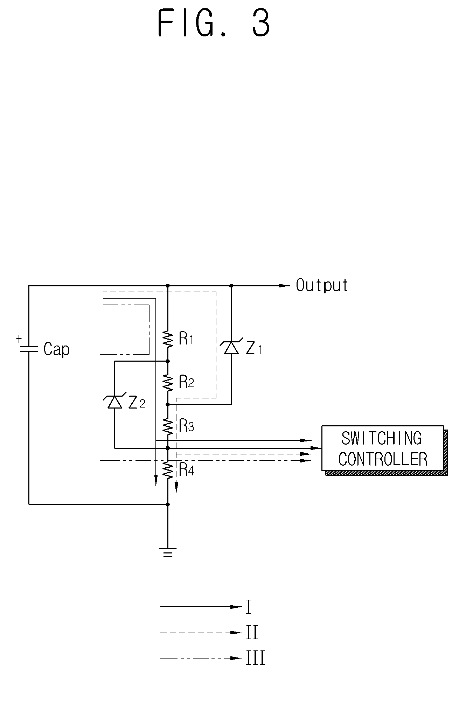

Hereinafter, the voltage detecting part 30 and the constant voltage generating part 40 according to the embodiment of the present invention will be described in more detail with reference to FIG. 3. In the figure, a capacitor Cap is provided as the smoothing part 15.

The voltage detecting part 30, which is connected to the smoothing part 15, detects the level of voltage of power outputted from the smoothing part 15 and comprises one or more resistors connected in series.

Specifically, as shown in FIG. 3, the voltage detecting part 30 may be embodied by a voltage divider comprising first to fourth resistors R1 to R4. The level of voltage of the power outputted from the smoothing part 15 is divided by the first to fourth resistors R1 to R4, and the level of voltage across the fourth resistor is applied to the switching controller 23.

The constant voltage generating part 40 is connected in parallel to the resistors of the voltage detecting part 30. In the case where the level of voltage of output power is slowly increased due to an erroneous operation of the resistors of the voltage detecting part 30, the constant voltage generating part 40 intercepts power from the resistors, drops voltage of the intercepted power by a preset normal voltage level, and then applies the dropped voltage to the switching controller 23. The constant voltage generating part 40 may be embodied by a voltage regulator diode, which is a semiconductor device that keeps a voltage constant even when current is varied due to variation of a load, for example, a Zener diode or a transient voltage suppressor diode (TVS-diode).

In this embodiment, the constant voltage generating part 40 comprises a first voltage regulator diode Z1 and a second voltage regulator diode Z2. The first voltage regulator diode Z1 has a cathode connected to an upper end of the first resistor R1 and an anode connected to a lower end of the second resistor R2, and the second voltage regulator diode Z2 has a cathode connected to an upper end of the second resistor R2 and an anode connected to a lower end of the third resistor R3.

A voltage regulator diode conducts when a potential difference (i.e., voltage) between the anode and the cathode exceeds its breakdown voltage. Accordingly, the voltage regulator diode is designed to have a breakdown voltage corresponding to resistance of resistors connected in parallel to the voltage regulator diode. If a voltage across the resistor connected in parallel to the voltage regulator diode is higher than the breakdown voltage of the voltage regulator diode, the voltage regulator diode conducts to intercept power from the resistor, drops voltage of the power by the breakdown voltage, and applies the dropped voltage to the switching controller 23.

Thus, when the resistors of the voltage detecting part 30 operate erroneously, the level of voltage of power supplied to the switching controller 23 is decreased, thereby preventing the output voltage from the smoothing part 15 from gradually increasing.

Hereinafter, a flow of power according to the operation of the voltage detecting part 30 will be described in more detail.

When the voltage detecting part 30 operates normally, since the voltages across the resistors connected in parallel to the voltage regulator diodes Z1 and Z2 are lower than the breakdown voltages of the voltage regulator diodes Z1 and Z2, the power from the smoothing part 15 is supplied to the switching controller 23 via a first path I.

When the first resistor R1 operates erroneously as it is opened, a potential difference between the first resistor R1 and the second resistor R2 becomes larger than the breakdown voltage at which the first voltage regulator diode Z1 conducts. Accordingly, the first voltage regulator diode Z1 conducts so that the power from the smoothing part 15 is supplied to the switching controller 23 via a second path II.

When the third resistor R3 operates erroneously as it is opened, a potential difference between the second resistor R2 and the third resistor R3 becomes larger than the breakdown voltage at which the second voltage regulator diode Z2 conducts. Accordingly, the second voltage regulator diode Z2 conducts so that the power from the smoothing part 15 is supplied to the switching controller 23 via a third path III.

When the second resistor R2 operates erroneously as it is opened, one having a lower breakdown voltage of the first and second voltage regulator diodes Z1 and Z2 conducts. Accordingly, the power from the smoothing part 15 is supplied to the switching controller 23 via the second path II or the third path III.

When the fourth resistor R4 operates erroneously as it is opened, the level of voltage applied to the switching controller 23 rapidly increases, and accordingly, an internal protection circuit of the switching controller 23 operates to stop a switching signal or turn the switching controller 23 into a latch mode.

In addition, when the resistors of the voltage detecting part 30 and the voltage regulator diodes of the constant voltage generating part 40 are short-circuited, the level of voltage applied to the switching controller 23 also rapidly increases, and accordingly, the internal protection circuit of the switching controller 23 operates to stop a switching signal or turn the switching controller 23 into a latch mode.

Accordingly, the switching controller 23 can be protected when the level of voltage of the output power is varied not only rapidly but also slowly. In addition, fewer parts and lower costs are required to protect the switching controller 23, and moreover, standby power consumption is not increased since there is no power loss when the power supply device is constructed.

As apparent from the above description, the present invention provides a power supply device, which is capable of protecting a circuit even in slow increase of an output voltage as well as rapid increase of the output voltage.

In addition, the present invention provides a power supply device, which is capable of protecting a circuit even when an overvoltage occurs due to an erroneous operation of a voltage detecting part that detects an output voltage.

Furthermore, the present invention provides a power supply device with fewer parts and lower costs required to protect a circuit and without increase of standby power consumption.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A power supply device comprising:
a power supplying part (10) that is operable to supply power;
a voltage detecting part (30) that is operable to detect the level of voltage of the power supplied from the power supplying part (10) using at least one resistor (R1-R4);
a switching converting part (20) that is operable to switch on/off to allow the power supplying part (10) to output power having a constant level of voltage based on the level of voltage detected by the voltage detecting part (30); and
a constant voltage generating part (40) that is operable to receive power applied to the at least one resistor (R1-R4), to drop a voltage of the received power by a preset normal voltage level, and to supply the dropped voltage to the switching converting part (20), when the level of voltage of the power supplied from the power supplying part (10) gradually increases.

2. The power supply device according to claim 1, wherein the switching converting part (20) comprises a switching part (21) that is operable to adjust the level of voltage of the power and a switching controller (23) that is operable to control the switching part (21), and the switching controller (23) is operable to compare the level of voltage detected by the voltage detecting part (30) with a predetermined reference voltage, to increase the number of times of switching on/off the switching part (21) when the detected level of voltage is lower than the reference voltage, and to decrease the number of times of switching on/off the switching part (21) when the detected level of voltage is higher than the reference voltage.

3. The power supply device according to claim 2, wherein the constant voltage generating part (40) comprises a voltage regulator diode connected in parallel to the at least one resistor (R1-R4), and the voltage regulator diode has a breakdown voltage corresponding to resistance of the at least one resistor (R1-R4).

4. The power supply device according to claim 2, wherein the voltage regulator diode is operable to conduct so that power is applied to the switching controller (23) when a voltage across the at least one resistor (R1-R4) is larger than the breakdown voltage.

5. The power supply device according to any one of claims 2 to 4, wherein the voltage detecting part (30) comprises a first resistor (R1), a second resistor (R2), a third resistor (R3) and a fourth resistor (R4) connected in series, and
wherein the constant voltage generating part (40) comprises a first voltage regulator diode (Z1) having a cathode connected to an upper end of the first resistor (R1) and an anode connected to a lower end of the second resistor (R2), and a second voltage regulator diode (Z2) having a cathode connected to an upper end of the second resistor (R2) and an anode connected to a lower end of the third resistor (R3).

6. The power supply device according to claim 5, adapted such that power is applied to the first voltage regulator diode (Z1) when a voltage across the first resistor (R1) increases and a voltage difference between the first resistor (R1) and the second resistor (R2) is larger than a breakdown voltage of the first voltage regulator diode (Z1).

7. The power supply device according to claim 5, adapted such that power is applied to the second voltage regulator diode (Z2) when a voltage across the third resistor (R3) increases and a voltage difference between the second resistor (R2) and the third resistor (R3) is larger than a breakdown voltage of the second voltage regulator diode (Z2).

8. The power supply device according to claim 5, adapted such that power is applied to the first voltage regulator diode (Z1) when a voltage across the second resistor (R2) increases and a voltage difference between the second resistor (R3) and the third resistor (R3) is larger than a breakdown voltage of the first voltage regulator diode (Z1), and power is applied to the second voltage regulator diode (Z2) when the voltage difference between the second resistor (R2) and the third resistor (R3) is larger than a breakdown voltage of the second voltage regulator diode (Z2).
